## Europäisches Patentamt

## European Patent Office

## Office européen des brevets

(19)

(11) Veröffentlichungsnummer : **0 095 572**
**B1**

(12)

# EUROPÄISCHE PATENTSCHRIFT

(45) Veröffentlichungstag der Patentschrift :
03.12.86

(21) Anmeldenummer : 83103263.6

(22) Anmeldetag : 02.04.83

(51) Int. Cl.⁴ : **H 02 K 21/02**, H 02 K   7/118

(54) **Drehrichtungssperre für den Rotor eines Synchronmotors.**

(30) Priorität : 01.06.82 CH 3345/82

(43) Veröffentlichungstag der Anmeldung :
07.12.83 Patentblatt 83/49

(45) Bekanntmachung des Hinweises auf die Patenterteilung : 03.12.86 Patentblatt 86/49

(84) Benannte Vertragsstaaten :
DE FR GB IT

(56) Entgegenhaltungen :
FR-A- 1 230 005
US-A- 2 633 950
US-A- 3 539 844
US-A- 3 751 697
US-A- 3 842 296
US-A- 3 860 841

(73) Patentinhaber : SODECO-SAIA AG
Fabrik elektrischer Apparate
CH-3280 Murten (CH)

(72) Erfinder : Gerber, Hermann
Oberdorf
CH-1781 Münchenwiler (CH)
Erfinder : Schmutz, Michel
Neugut 17
CH-3280 Murten (CH)

(74) Vertreter : Müller, Hans-Jürgen, Dipl.-Ing. et al
Müller, Schupfner & Gauger Lucile-Grahn-Strasse 38
Postfach 80 13 69
D-8000 München 80 (DE)

## Beschreibung

Die Erfindung bezieht sich auf eine einstückige Drehrichtungssperre zur Gewährleistung der geforderten Drehrichtung für den Rotor eines Synchronmotors nach dem Oberbegriff des Anspruchs 1.

Aus der FR-PS 1 230 005 ist eine Drehrichtungssperre bekannt, bei der eine auf der Rotorwelle gleitende Spiralfeder sich bei falscher Drehrichtung so weit festzieht, dass die Rotorwelle bis zum Stillstand abgebremst wird.

Bei einer Drehrichtungssperre gemäss der US-PS 3 860 841 greift ein durch Friktion mit der Rotorwelle bewegtes Sperrelement in an den Rotor angeformte Zähne ein, wobei die Stärke der Friktion durch einen zusätzlichen elastischen Ring bestimmt ist.

Bekannt sind noch weitere Drehrichtungssperren, zum Beispiel aus der CH-PS 570 064, die alle aus mehreren Teilen aufgebaut und daher in der Herstellung und Montage relativ aufwendig sind.

Der Erfindung liegt die Aufgabe zugrunde, eine einfach aufgebaute Drehrichtungssperre von hoher Langzeitstabilität zu entwickeln.

Die Erfindung ist im Anspruch 1 gekennzeichnet.

Nachfolgend werden zwei Ausführungsbeispiele der Erfindung an Hand der Zeichnung näher erläutert.

Es zeigen :

Figur 1 eine Draufsicht auf eine Drehrichtungssperre bei weggeschnittenem Stator-Gehäusedeckel und

Figur 2 einen Schnitt längs der Linie A-A der Fig. 1, beide Fig. entsprechend einer ersten Ausführungsform, und

Fig. 3 eine Draufsicht, z. T. im Schnitt, einer zweiten Ausführungsform.

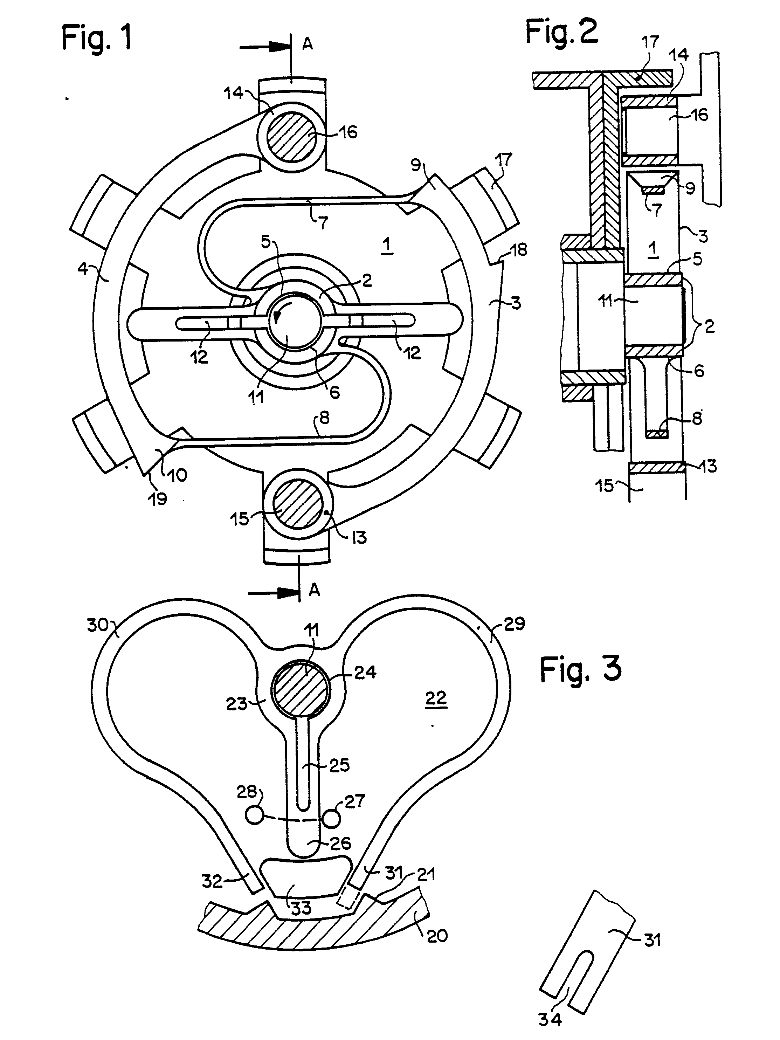

In der Fig. 1 und 2 ist eine Drehrichtungssperre 1 dargestellt, die einstückig als Spritzteil hergestellt ist und die aus einer zwei Gleitflächen 5 und 6 aufweisenden Hülse 2 und aus zwei sich je an einem Fixpunkt abstützenden Sperrelementen 3, 4 besteht, die beide mit der Hülse 2 federnd verbunden sind.

Die Gleitflächen 5 und 6 der Hülse 2 sind radial gegeneinander federnd angeordnet. Von der Hülse 2 aus führen je ein Federarm 7 bzw. 8 zum äusseren Ende 9 bzw. 10 des als Sperrklinke wirkenden Sperrelementes 3 und 4. Die Gleitflächen 5 und 6 umschliessen federnd gleitend eine Rotorwelle 11 des Synchronmotors. Zu diesem Zweck stossen die beiden Gleitflächen 5 und 6 nicht aneinander, sondern sie bilden zwischen sich einen Spalt 12, der sich beidseitig der Gleitflächen 5 und 6 über diese hinausgehend in einer durch die Rotorwellenachse verlaufenden Ebene fortsetzt. Die beidseitigen Abschlüsse des Spaltes 12 liegen parallel zu der Rotorwellenachse und bilden dort die einstückige Verbindung der beiden Gleitflächen 5 und 6. Das den Spalt 12 umschliessende Material erzeugt die Federkraft, welche die beiden Gleitflächen 5 und 6 gegeneinander drückt. Die Gleitflächen 5, 6 bewirken so bei laufender Rotorwelle 11 immer eine geringe Reibungskraft, welche versucht, die ganze Drehrichtungssperre 1 mitzudrehen, wie dies später noch beschrieben ist.

Die Drehbewegung der Hülse 2 überträgt sich auf die äusseren Enden 9 bzw. 10 der Sperrelemente 3 und 4, die mit ihren inneren Enden 13 und 14 an Fixpunkte darstellenden feststehenden Bolzen 15, 16 schwenkbar gelagert sind, wobei dei Achsen der Bolzen 15, 16 zur Rotorwelle 11 parallel sind.

An Stelle der beiden Sperrelemente 3 und 4 des beschriebenen Ausführungsbeispiele könnte auch nur ein einziges Sperrelement vorhanden sein, doch kann es aus Belastungsgründen zweckmässig sein, deren zwei vorzusehen und sie so zu lagern, dass die Achsen der beiden Bolzen 15, 16 mit der Rotorwellenachse in einer gemeinsamen Ebene liegen.

Durch die Reibung der Gleitflächen 5, 6 auf der Rotorwelle 11 führt die ganze Hülse 2 beim Anlaufen des Synchronmotors eine Drehbewegung aus, die sich mit Hilfe der Federarme 7 und 8 auf die als Sperrklinken wirkenden Sperrelemente 3 und 4 als Schwenkbewegung überträgt. In der einen Drehrichtung der Rotorwelle 11 — in der Zeichnung im Uhrzeigersinn — schwenken die Sperrelemente 3 und 4 von innen gegen aussen und dringen in den Bereich rotierender Anschläge 17 des Synchronmotors ein. Sie hindern dadurch die Rotorwelle 11 am Weiterdrehen. In der anderen Drehrichtung schwenken die Sperrelemente 3 und 4 mit Hilfe ihrer Federarme 7 und 8 gegen innen und geben die Anschläge 17 und damit die Rotorwelle 11 frei. Dadurch kann der Synchronmotor nur in der einen Drehrichtung der Rotorwelle 11 anlaufen.

Die Sperrelemente 3 und 4 besitzen an ihrer Berührungsstelle mit den Anschläge 17 einen klinkenartigen Zahn 18 bzw. 19. Am in der Fig. 1 linken Sperrelement 4 ist dieser Zahn 19 im Unterschied zum rechten Sperrelement 3 am äusseren Ende 10 angeordnet, während demgegenüber der Zahn 18 am Sperrelement 3 bezüglich des Abstandes der Anschläge 17 um eine halbe Anschlagsteilung verschoben ist. Dadurch wird erreicht, dass sich der mögliche Rücklaufweg bis zur Sperrung der Rotorwelle 11 um den gleichen Betrag verkleinert und nur noch eine halbe Anschlagsteilung betragen kann. Der Motor wird daher seine Synchron-Drehzahl schneller erreichen. Ferner ist es auf diese Weise möglich, die für das Anlaufdrehmoment in der gewünschten Drehrichtung bezüglich der Lage der Permanentmagneten im Synchronmotor günstigste Abbremsstellung des Rotors besser einzuhalten als bei gleichartig ausgeführten Sperrelementen 3 und 4. Dadurch ergibt sich eine erhöhte Anlaufsicherheit.

Beim Ausführungsbeispiel nach der Fig. 3 tritt an die Stelle der Anschläge 17 ein zum Beispiel aus kunststoffgebundenen Magnetpartikeln bestehender Rotor 20 mit einer Anschläge darstellenden Innen-Sperrverzahnung 21, in welche eine Drehrichtungssperre 22 eingreift. Die Drehrichtungssperre 22 besitzt ebenfalls eine Hülse 23 mit einer eine Gleitfläche 24 bildenden Bohrung, welche die Fläche darstellt, mit der die Hülse 23 auf der Rotorwelle 11 federnd gleitet. Zu diesem Zweck geht von der Gleitfläche 24 radial ein Schlitz 25 aus, der mit der Gleitfläche 24 zusammen die Form eines Schlüsselloches bildet, wobei die Länge des Schlitzes 25 grösser als der Durchmesser der Rotorwelle 11 ist. Die Hülse 23 enthält auf diese Weise die für ein federndes Gleiten auf der Rotorwelle 11 nötige Elastizität, und dies bewirkt, dass von der Rotorwelle 11 auf die Hülse 23 dauernd ein geringes Drehmoment übertragen wird. Der den Schlitz 25 umgebende Teil der Hülse 23 bildet dadurch eine vorstehende Rippe 26, welche zur Begrenzung der möglichen Drehbewegung der Hülse 23 dient, wozu zwei Anschläge 27 und 28 vorhanden sind, an denen die Rippe 26 jeweilen ansteht.

Zur einteiligen Drehrichtungssperre 22 gehört ferner wenigstens ein an die Hülse 23 angeformter, infolge seiner grossen freien Länge federnder Federarm 29, der als Sperrelement dient. Die Form der Hülse 23 ist dazu nicht zwingend und sie könnte auch in der Art der anhand der Fig. 1 beschriebenen Hülse 2 gewählt sein. Mit seinem freien Ende 31 liegt der Federarm 29 an einem einen Fixpunkt bildenden feststehenden Nocken 33 an, gleitet bei einer Drehbewegung der Rotorwelle 11 bzw. der Hülse 23 am Nocken 33 entlang und greift bei falscher Drehrichtung in die Sperrverzahnung 21 ein, wie dies in der Fig. 3 am Ende 31 mit unterbrochener Linie dargestellt ist. Das Ende 31 verklemmt sich dann zwischen der Sperrverzahnung 21 und dem Nocken 33 und hindert den Rotor 20 am Drehen, während in der anderen Drehrichtung das freie Ende 31 den Rotor 20 freigibt.

Die anhand der Fig. 3 beschriebene Drehrichtungssperre 22 mit nur einem Federarm 29 sowie die Drehrichtungssperre 1 gemäss den Fig. 1 und 2 ermöglichen beide eine Vorwahl der zulässigen Drehrichtung, indem bei der Montage die Wahl zwischen den zwei möglichen Lagen, in denen die Drehrichtungssperre 22 bzw. 1 auf die Rotorwelle 11 aufgeschoben wird, die Drehrichtung bestimmt.

Eine vorteilhafte Drehrichtungs-Vorwahl ergibt sich auch dann, wenn die Drehrichtungssperre 22 gemäss der Fig. 3 als Sperrelement zwei Federarme 29, 30 aufweist, die mit ihren Enden 31 und 32 beide am gleichen feststehenden Nocken 33 anliegen. Dabei sind die Federarme 29, 30 bezüglich der Längsachse des Spaltes 12 (Fig. 1) bzw. des Schlitzes 25 (Fig. 3) spiegelbildlich angeordnet. Wenigstens ein fester Anschlag 27 dient der Begrenzung der möglichen Drehbewegung der Hülse 2, 23 und bestimmt die Drehrichtung.

In der Darstellung der Fig. 3 befindet sich in der Ruhelage der Drehrichtungssperre 22 der rechte Anschlag 27 näher bei der Rippe 26 als der linke Anschlag 28. Dreht sich daher die Rotorwelle 11 und damit die Hülse 23 im Gegenuhrzeigersinn, dann steht die Rippe 26 am Anschlag 27 an und das Ende 32 kann nicht in die Sperrverzahnung 21 eingreifen, während in der anderen Drehrichtung die Rippe 26 so weit ausschwenken kann, dass der Rotor 20 vom Ende 31 des Federarms 29 abgestoppt wird. Der Synchronmotor kann daher nur im Gegenuhrzeigersinn anlaufen.

Für ein federnd gedämpftes Abbremsen des in der falschen Drehrichtung anlaufenden Rotors 20 kann es von Vorteil sein, die Enden 31 und 32 mit einem Schlitz 34 zu versehen, wie dies in der Fig. 3 unten für den Finger 31 dargestellt ist. Der geschlitzte Teil wirkt dann zusätzlich als Dämpfungsfeder.

Werden die beiden Anschläge 27 und 28 unter Einhaltung ihres gleichen gegenseitigen Abstandes verschiebbar angeordnet, dann kann diese Anordnung auf einfache Weise zur Vorwahl der Drehrichtung dienen.

Die beschriebenen Drehrichtungssperren 1 bzw. 22 lassen sich aus einem Teil, zum Beispiel durch Spritzen aus thermoplastischem Kunststoff, mit geringem Aufwand herstellen. Die Herstellung als einstückiges Spritzteil bietet den Vorteil, dass die Gleitflächen 5 und 6 beziehungsweise 24 wohldefinierte Oberflächengüte besitzen, woraus eine gute Konstanz der Reibungskraft folgt. Gleichzeitig sind auch die die Grösse der Reibungskräfte beeinflussenden Federkräfte keinen herstellungsmässig bedingten grösseren Schwankungen unterworfen. Deshalb kann auf jegliche Justierung bei der Montage verzichtet werden. Dank den Gleiteigenschaften des Spritzmaterials und der relativ grossen Fläche, die aus der Rotorwelle 11 reibt, ergeben sich ein sehr gutes Langzeitverhalten und ein äusserst geringer Verschleiss.

## Patentansprüche

1. Einstückige Drehrichtungssperre (1 ; 22) zur Gewährleistung der geforderten Drehrichtung für den Rotor eines Synchronmotors, die ein Sperrglied mit wenigstens einer auf der Rotorwelle (11) dauernd unter Federkraft anliegenden Gleitfläche (5, 6 ; 24) aufweist, wobei das Sperrglied über einen Federarm (7, 8 ; 29, 30) mit einem Sperrelement (3, 4 ; 31, 32) verbunden ist, das sich an einem Fixpunkt (15, 16 ; 33) des Motors abstützt, dadurch gekennzeichnet, dass das Sperrglied als Hülse (2 ; 23) die Rotorwelle umgreift, dass die Hülse (2 ; 23) auf der Innenseite mindestens einen in axialer und radialer Richtung verlaufenden Schlitz (12 ; 25) aufweist, der das federnde Anliegen der Hülse (2 ; 23) an der Rotorwelle (11) erlaubt, und dass bei falscher Drehrichtung wegen der Reibungskraft zwischen der Rotorwelle (11) und der Gleitfläche (5, 6 ; 24) die Hülse (2 ; 23) das Sperrelement (3, 4 ; 31, 32) über den Federarm (7, 8 ; 29, 30) so betätigt, dass ein Teil des Sperrelementes (3, 4 ; 31, 32) von innen her an einen Anschlag (17 ; 21) des Rotors angreift.

2. Drehrichtungssperre nach Anspruch 1, dadurch gekennzeichnet, dass von der Hülse (2) aus wenigstens ein Federarm (7, 8) zum äusseren Ende (9, 10) wenigstens eines als Sperrklinke ausgebildeten Sperrelementes (3, 4) führt und dass das Sperrelement (3, 4) mit seinem inneren Ende (13, 14) auf einem Fixpunkte darstellenden feststehenden Bolzen (15, 16) schwenkbar gelagert ist, wobei die Achse des Bolzens (15, 16) zur Rotorwelle (11) parallel verläuft und sich eine Drehbewegung der Hülse (2) über den Federarm (7, 8) als Schwenkbewegung auf das Sperrelement (3, 4) überträgt.

3. Drehrichtungssperre nach Anspruch 1, dadurch gekennzeichnet, dass als Sperrelement wenigstens ein an der Hülse (23) angeformter Federarm (29, 30) dient, dessen freies Ende (31, 32) sich an einem einen Fixpunkt bildenden feststehenden Nocken (33) abstützt, bei einer Drehbewegung der Rotorwelle (11) am Nocken (33) entlang gleitet und bei falscher Drehrichtung in eine Sperrverzahnung (21) als Anschlag des unmittelbar neben dem Nocken (33) vorbeilaufenden Rotors (20) eingreift, während in der anderen Drehrichtung das freie Ende (31, 32) den Rotor freigibt.

4. Drehrichtungssperre nach Anspruch 2, dadurch gekennzeichnet, dass die zulässige Drehrichtung des Rotors durch die Wahl zwischen den zwei möglichen Lagen der Sperre (1) beim Aufstecken auf die Rotorwelle (11) bestimmt ist.

5. Drehrichtungssperre nach Anspruch 3, dadurch gekennzeichnet, dass die Hülse (23) einen radialen Schlitz (25) aufweist, dessen radiale Länge grösser als der Durchmesser der Rotorwelle (11) ist, und dass der den Schlitz (25) umfassende Teil der Hülse (23) eine vorstehende Rippe (26) bildet.

6. Drehrichtungssperre nach Anspruch 2, dadurch gekennzeichnet, dass zwei Sperrelemente (3, 4) vorhanden und auf je einem Bolzen (15, 16) gelagert sind, wobei die Achsen der Bolzen (15, 16) mit der Rotorwellenachse in einer gemeinsamen Ebene liegen.

7. Drehrichtungssperre nach Anspruch 6, dadurch gekennzeichnet, dass die Sperrelemente (3, 4) an ihrer Berührungsstelle mit den Anschlägen (17) einen klinkenartigen Zahn (18 bzw. 19) aufweisen und dass die Lage dieses Zahnes (18 bzw. 19) an den beiden Sperrklinken (3 bzw. 4) unterschiedlich, und zwar bezüglich des Abstandes der Anschläge (17) voneinander um eine halbe Anschlags-Teilung verschoben ist.

8. Drehrichtungssperre nach Anspruch 3 oder 5, dadurch gekennzeichnet, dass sich als Sperrelement zwei Finger (29, 30) mit ihren freien Enden (31, 32) am feststehenden Nocken (33) abstützen und bezüglich der Längsachse des Schlitzes (25) spiegelbildlich angeordnet sind und dass zur Begrenzung der möglichen Drehbewegung der Hülse (2 ; 23) wenigstens ein feststehender Anschlag (27, 28) vorhanden ist.

9. Drehrichtungssperre nach Anspruch 8, dadurch gekennzeichnet, dass zwei feststehende Anschläge (27, 28) vorhanden sind, die mit gleichbleibendem Abstand verschiebbar angeordnet sind.

## Claims

1. A one-piece rotary directional locking means (1 ; 22) for ensuring the required direction of rotary movement for the rotor of a synchronous motor, which has a locking member with at least one sliding surface (5, 6 ; 24) which bears continuously under a spring force against the rotor shaft (11), wherein the locking member is connected by way of a spring arm (7, 8 ; 29, 30) to a locking element (3, 4 ; 31, 32) which is supported at a fixed point (15, 16 ; 33) of the motor, characterised in that the locking member in the form of a sleeve (2 ; 23) embraces the rotor shaft, that the sleeve (2 ; 23) is provided on the inside with at least one axially and extending slot (12 ; 25) which permits the sleeve (2 ; 23) to bear resiliently against the rotor shaft (11), and that upon rotation in the wrong direction, by virtue of the frictional force between the rotor shaft (11) and the sliding surface (5, 6 ; 24) the sleeve (2 ; 23) actuates the locking element (3, 4 ; 31, 32) by way of the spring arm (7, 8 ; 29, 30) in such a way that a part of the locking element (3, 4 ; 31, 32) engages en abutment (17 ; 21) of the rotor from the inside.

2. A rotary directional locking means according to claim 1 characterised in that at least one spring arm (7, 8) goes from the sleeve (2) to the outer end (9, 10) of at least one locking element (3, 4) which is in the form of a locking pawl and that the locking element (3, 4) is pivotably mounted with its inner end (13, 14) on a stationary pin (15, 16) representing fixed points, wherein the axis of the pin (15, 16) extends in parallel relationship to the rotor shaft (11) and a rotary movement of the sleeve (2) is transmitted to the locking element (3, 4) by way of the spring arm (7, 8) as a pivotal movement.

3. A rotary directional locking means according to claim 1 characterised in that at least one spring arm (29, 30) which is formed on the sleeve (23) serves as the locking element, the free end (31, 32) of said spring arm being supported at a stationary cam (33) which forms a fixed point, sliding along the cam (33) upon a rotary movement of the rotor shaft (11), and, upon rotary movement of the rotor in the wrong direction, engaging into a locking tooth configuration (21) as an abutment on the rotor (20) which moves past directly beside the cam (33), while in the other direction of rotation the free end (31, 32) releases the rotor.

4. A rotary directional locking means according to claim 2 characterised in that the permissible direction of rotation of the rotor is determined by the choice between the two possible positions of the locking means (1) when it is fitted on to the rotor shaft (11).

5. A rotary directional locking means according to claim 3 characterised in that the sleeve (23) has a radial slot (25) whose radial length is greater than the diameter of the rotor shaft (11) and that the part of the sleeve (23) which embraces the slot (25) forms a projecting rib (26).

6. A rotary directional locking means according to claim 2 characterised in that there are two locking elements (3, 4) which are each mounted on a respective pin (15, 16), wherein the axes of the pins (15, 16) lie in a common plane with the axis of the rotor shaft.

7. A rotary directional locking means according to claim 6 characterised in that the locking elements (3, 4) have a pawl-like tooth (18 and 19 respectively) at their points of contact with the abutments (17) and that the position of said tooth (18, 19) is different on the two locking pawls (3 and 4 respectively), more particularly being displaced relative to the spacing of the abutments (17) from each other by half the abutment pitch.

8. A rotary directional locking means according to claim 3 or claim 5 characterised in that as the locking element, two fingers (29, 30) bear with their free ends (31, 32) against the stationary cam (33) and are arranged in mirror image relationship with respect to the longitudinal axis of the slot (25) and that there is provided at least one stationary abutment (27, 28) for limiting the possible rotary movement of the sleeve (2 ; 23).

9. A rotary directional locking means according to claim 8 characterised in that there are provided two stationary abutments (27, 28) which are arranged displaceably with a constant spacing.

**Revendications**

1. Dispositif de blocage du sens de rotation en une seule pièce (1 ; 22) destiné à garantir que le rotor d'un moteur synchrone tournera dans le sens de rotation voulu, qui comprend un organe de blocage présentant au moins une surface de glissement (5, 6 ; 24) appuyée en permanence sur l'arbre (11) du rotor avec une force élastique, l'organe de blocage étant relié, par l'intermédiaire d'un bras élastique (7, 8 ; 29, 30) à un élément de blocage (3, 4 ; 31, 32) qui prend appui sur un point fixe (15, 16 ; 33) du moteur, caractérisé en ce que l'organe de blocage entoure l'arbre du rotor en formant un manchon (2 ; 23), en ce que le manchon (2 ; 23) présente, sur sa face interne, au moins une fente (12 ; 25) qui s'étend dans la direction axiale et dans la direction radiale et qui permet au manchon (2 ; 23) de s'appuyer élastiquement sur l'arbre (11) du rotor et en ce que, en réponse à un mauvais sens de rotation, et sous l'effet de la force de frottement entre l'arbre (11) du rotor et la surface de glissement (5, 6 ; 24), le manchon (2 ; 23) actionne l'élément de blocage (3, 4 ; 31, 32), par l'intermédiaire du bras élastique (7, 8 ; 29, 30), de telle manière qu'une partie de l'élément de blocage (3, 4 ; 31, 32) attaque par l'intérieur une butée (17 ; 21) du rotor.

2. Dispositif de blocage du sens de rotation selon la revendication 1, caractérisé en ce que, du manchon (2), part au moins un bras élastique (7, 8) qui aboutit à l'extrémité extérieure (9, 10) d'au moins un élément de blocage (3, 4) présentant la forme d'un cliquet et en ce que l'élément de blocage (3, 4) est monté oscillant, par son extrémité intérieure (13, 14), sur un tourillon fixe (15, 16) qui représente un point fixe, l'axe du tourillon (15, 16) s'étendant parallèlement à l'arbre (11) du rotor et transmettant un mouvement de rotation du manchon (2) à l'élément de blocage (3, 4) sous la forme d'un mouvement de pivotement, par l'intermédiaire du bras élastique (7, 8).

3. Dispositif de blocage du sens de rotation selon la revendication 1, caractérisé en ce qu'il comprend, comme élément de blocage, au moins un bras élastique (29, 30) formé sur le manchon (23), dont l'extrémité libre (31, 32) prend appui sur un bossage fixe (33) qui forme un point fixe, et glisse le long du bossage (33) en réponse à un mouvement de rotation de l'arbre (11) du rotor de sorte qu'en réponse à un mauvais sens de rotation, elle s'engage dans une denture de blocage (21), constituant une butée du rotor (20) qui circule à proximité immédiate du bossage (33) tandis que, dans l'autre sens de rotation, l'extrémité libre (31, 32) libère le rotor.

4. Dispositif de blocage du sens de rotation selon la revendication 2, caractérisé en ce que le sens de rotation admissible du rotor est déterminé par le choix entre deux positions possibles du dispositif de blocage (1) au moment où il s'emmanche sur l'arbre (11) du rotor.

5. Dispositif de blocage du sens de rotation selon la revendication 3, caractérisé en ce que le manchon (23) présente une fente radiale (25) dont la longueur radiale est plus grande que le diamètre de l'arbre (11) du rotor et en ce que la partie du manchon (23) qui entoure la fente (25) forme une nervure saillante (26).

6. Dispositif de blocage du sens de rotation selon la revendication 2, caractérisé en ce qu'il comprend deux éléments de blocage (3, 4) montés chacun sur un tourillon (15, 16), les axes des tourillons (15, 16) se trouvant avec l'axe de l'arbre du rotor dans un même plan.

7. Dispositif de blocage du sens de rotation selon la revendication 6, caractérisé en ce que les éléments de blocage (3, 4) présentent, à leur point de contact avec les butées (17) une dent en forme de cliquet (18 ou 19 respectivement) et en ce que la position de cette dent (18 ou 19 respectivement) est différente sur les deux cliquets de blocage (3 ou 4 respectivement) et, plus précisément, que les positions de ces dents sont décalées l'une par rapport à l'autre de la moitié du pas d'espacement des butées (17).

8. Dispositif de blocage du sens de rotation selon la revendication 3 ou la revendication 5, caractérisé en ce que, pour servir d'élément de blocage, deux doigts (29, 30) prennent appui par leurs extrémités libres (31, 32) contre le bossage fixe (33) et sont disposés symétriquement par rapport à l'axe longitudinal de la fente (25) et en ce que, pour limiter le mouvement de rotation possible du manchon (2 ; 33), il est prévu au moins une butée fixe (27, 28).

9. Dispositif de blocage du sens de rotation selon la revendication 8, caractérisé en ce qu'il comprend deux butées fixes (27, 28) qui sont montées mobiles en translation avec un espacement mutuel constant.

0 095 572

Fig. 1

Fig. 2

Fig. 3